# FASCICULE DE BREVET EUROPEEN

(11) **EP 3 890 913 B1**
(45) Date de publication et mention de la délivrance du brevet: **11.10.2023**
(21) Numéro de dépôt: 19828963.9
(22) Date de dépôt: 03.12.2019
(51) Int. Cl.: B23K 9/02, B22F 3/105, B22F 5/10, B23K 9/028, B23K 9/167, B23K 9/173, B23K 9/29, B23K 9/32

(54) **TORCHE DE SOUDAGE ET PROCÉDÉ DE FABRICATION CORRESPONDANT**
SCHWEISSBRENNER UND ENTSPRECHENDES HERSTELLUNGSVERFAHREN
WELDING TORCH AND CORRESPONDING MANUFACTURING METHOD

(30) Priorité: 05.12.2018 FR 1872355
(43) Date de publication de la demande: 13.10.2021
(73) Titulaire: Framatome, 92400 Courbevoie (FR)
(72) Inventeur: RANC, Maximilien, 71240 Laives (FR); PETIT, Alain, 71240 Varennes le Grand (FR); NICOLAS, Hervé, 71100 Chalon sur Saone (FR)
(74) Mandataire: Lavoix
(86) Numéro de dépôt international: PCT/EP2019/083472
(87) Numéro de publication internationale: WO 2020/115033

(56) Documents cités:
- WO-A1-96/01717
- JP-U- H0 314 074
- US-A1- 2018 079 024

## Description

La présente invention concerne les torches de soudage, et en particulier une torche de soudage, et un procédé de fabrication d'une telle torche de soudage selon le préambule des revendications 1 et 11 (voir par exemple WO 96/01717 A1)

Les opérations de réparation par soudage dans l'industrie nucléaire, ou plus généralement sur des équipements lourds et des appareils à pression, imposent dans certains cas l'utilisation de torches de soudage de géométries complexes (non rectilignes). Ces torches doivent être miniaturisées pour permettre l'accès à la zone à réparer.

Les torches de soudage sont fabriquées de manière classique par assemblage de pièces en des matériaux différents (laiton, acier inoxydable, cuivre, céramique). Ces pièces sont obtenues par exemple par usinage. Elles sont assemblées par des procédés tels que le vissage, le soudage, le brasage, etc.

De tels procédés de fabrication sont onéreux.

Les possibilités de miniaturisation sont limitées, notamment quand il est nécessaire d'intégrer de multiples fonctions : refroidissement, amenée de gaz de protection, instrumentation, vision déportée, etc.

Dans ce contexte, l'invention vise à proposer une torche de soudage ne présentant pas les inconvénients ci-dessus. A cette fin, l'invention porte selon un premier aspect sur une torche de soudage telle que définie dans la revendication 1, comprenant
- une tête comportant un corps portant une électrode;
- une alimentation électrique, comportant une source de courant électrique;
- un fil de métal d'apport et un guide-fil guidant le fil de métal d'apport jusqu'à l'électrode; le corps étant obtenu par fabrication additive en un métal conduisant l'électricité, l'électrode étant raccordée électriquement à la source de courant électrique par le métal constituant le corps ;
le guide-fil comprenant une gaine isolante à l'intérieur de laquelle se déplace le fil de métal d'apport, le fil de métal d'apport étant isolé électriquement du potentiel du corps par la gaine isolante.

La fabrication de torche de soudage par fabrication additive, c'est-à-dire par impression en trois dimensions, permet d'obtenir des têtes de soudage de formes complexes, adaptées à chaque situation. Une telle fabrication est peu coûteuse.

Dans le cas de la mise en oeuvre du procédé à arc électrique sous protection gazeuse avec métal d'apport, le corps de la torche doit intégrer au moins les fonctions amenée de courant électrique, de gaz de protection et de passage du fil de métal d'apport, tout en étant très compact. Notamment, le passage du courant électrique peut se faire au travers du matériau constituant le corps de torche, de telle sorte qu'il n'est pas nécessaire de prévoir un circuit spécifique pour le passage du courant.

Le guide-fil du fil de métal d'apport peut ainsi être intégré à la tête de soudage du fait de la présence de la gaine isolante. Ceci contribue à la compacité de la torche.

Il peut notamment faire saillie hors du corps de torche vers la pointe de l'électrode pour permettre l'arrivée du fil de métal d'apport à proximité de ladite pointe de l'électrode.

La torche de soudage peut également présenter une ou plusieurs des caractéristiques ci-dessous, considérées individuellement ou selon toutes les combinaisons techniquement possibles :
- la torche de soudage comprend un porteur solidaire de la tête, le porteur étant obtenu par fabrication additive en un métal conduisant l'électricité, l'électrode étant raccordée électriquement à la source de courant électrique par le métal constituant le porteur, le fil de métal d'apport étant isolé électriquement du potentiel du porteur par la gaine isolante ;
- la torche de soudage comprend une embase obtenue par fabrication additive en un métal conduisant l'électricité, l'électrode étant raccordée électriquement à la source de courant électrique par le métal constituant l'embase, le porteur étant solidaire de l'embase;
- la torche de soudage comprend une embase obtenue par fabrication additive en un métal conduisant l'électricité, l'électrode étant raccordée électriquement à la source de courant électrique par le métal constituant l'embase, la tête étant solidaire de l'embase ;
- le corps comporte une cavité interne dans laquelle passent le fil de métal d'apport et la gaine isolante ;
- le guide-fil comprend un embout en céramique fixé au corps dans le prolongement de la cavité interne ;
- le guide-fil comprend un tube situé entièrement à l'extérieur de la tête, dans lequel passent le fil de métal d'apport et la gaine isolante ;
- le corps comporte une ouverture de diffusion du gaz de protection autour de l'électrode dans laquelle débouche la cavité interne de passage du gaz de protection, la tête comprenant une grille de diffusion s'étendant dans l'ouverture de diffusion et obtenue par fabrication additive conjointement avec le corps ;
- la torche comprend un système d'observation vidéo, le corps ayant une cavité interne de passage du système d'observation vidéo ;
- la torche comprend au moins un capteur porté par le corps et un câble de transmission du signal raccordé au capteur, le corps ayant une cavité interne de passage du câble de transmission du signal.

Selon un second aspect, l'invention porte sur un procédé de fabrication d'une torche de soudage ayant les caractéristiques ci-dessus, le procédé comprenant une étape fabrication au cours de laquelle le corps est obtenu par fabrication additive en un métal conduisant l'électricité, voir la revendication 11.

D'autres caractéristiques et avantages de l'invention ressortiront de la description détaillée qui en est donnée ci-dessous, à titre indicatif et nullement limitatif, en référence aux figures annexées, parmi lesquelles :
- [Fig 1] la figure 1 est une vue de côté d'une torche de soudage selon l'invention engagée dans un tube ;
- [Fig 2] [Fig 3] les figures 2 et 3 sont des vues en perspectives, prises selon deux incidences différentes, d'une seconde torche de soudage selon l'invention ;
- [Fig 4] la figure 4 est une vue en section de la gaine isolante et du fil de métal d'apport ;
- [Fig 5] la figure 5 est une vue éclatée de la tête de la torche de soudage des figures 2 et 3, montrant la cavité interne de passage du gaz de protection et la grille de diffusion du gaz de protection ;
- [Fig 6] la figure 6 est une vue en coupe axiale de la tête de la torche des figures 2 et 3, montrant la cavité interne de passage du fluide de refroidissement et la cavité interne de passage du gaz de protection ;
- [Fig 7] la figure 7 est une vue en coupe axiale de la tête de la torche des figures 2 et 3, similaire à celle de la figure 5, montrant les cavités internes de passage de l'instrumentation et la cavité interne de passage du gaz de protection ; et
- [Fig 8] la figure 8 est une vue en perspective de la tête d'une troisième torche de soudage non couverte par la présente invention.

La torche de soudage de l'invention est destinée typiquement à la réalisation d'opération de soudage avec métal d'apport, dans des zones où l'espace disponible est réduit ou dans des zones inaccessibles pour des opérateurs.

Elle est notamment destinée à la réalisation d'opérations de maintenance dans l'industrie nucléaire, par exemple une ou plusieurs des opérations énumérées ci-dessous :
- réparation d'une manchette de canne chauffante dans le pressuriseur d'un réacteur nucléaire à eau pressurisée (REP, ou PWR en anglais) ;
- remplacement d'un piquage de branche primaire ;
- toute intervention nécessitant une réparation dans un environnement inaccessible à l'homme, soit pour des raisons d'accessibilité soit pour des raisons radiologiques.

En variante, elle est destinée à des interventions sur des équipements lourds et des appareils à pression, dans des installations nucléaires ou des installations industrielles non nucléaires.

La torche de soudage est destinée à être utilisée dans un procédé de soudage à arc sous protection gazeuse de type TIG, MIG, MAG, ou tout autre procédé adapté.

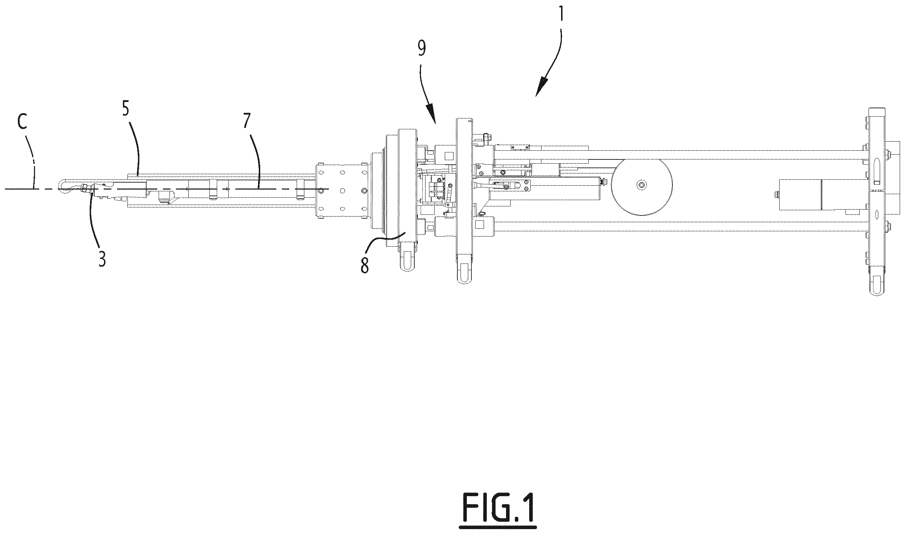

La torche de soudage 1 illustrée sur la figure 1, comporte une tête 3.

Celle-ci est de taille réduite, et peut être insérée dans des espaces réduits, ici l'intérieur d'un conduit 5.

Typiquement, la tête 3 présente une forme cylindrique, de section sensiblement circulaire. Elle présente un diamètre inférieur à 50 mm, de préférence inférieur à 30 mm, encore de préférence, inférieur à 20 mm.

Elle peut présenter par exemple un diamètre de 20mm, de manière à réaliser des opérations de soudage à l'intérieur d'un conduit de diamètre inférieur à 50 mm.

La torche de soudage 1 comprend également un porteur 7 solidaire de la tête 3.

Elle comporte généralement une embase 8, le porteur 7 étant solidaire de l'embase 8.

L'embase 8 présente, perpendiculairement à l'axe du conduit, une section beaucoup plus grande que le porteur ou la tête. Elle est prévue pour rester à l'extérieur du conduit.

L'embase 8 assure la liaison mécanique avec le support de la torche de soudage. Elle porte le porteur 7 et d'autres équipement ou mécanismes tels que les alimentations en fluide (gaz et liquide de refroidissement), en courant électrique et en fil d'apport.

Le porteur 7 est prévu pour être engagé dans le conduit 5. Il permet de placer la tête de soudage 3 dans la zone de travail.

Le porteur 7 présente la forme d'un bras allongé selon un axe central C.

Sur la figure 1, l'axe C est parallèle à l'axe central du conduit 5.

La tête 3 est située à une extrémité axiale du porteur 7.

La tête 3 est située à l'extrémité axiale du porteur 7 opposée à l'embase 8.

La torche de soudage 1 comporte de préférence une motorisation 9 configurée pour faire tourner la tête 3 par rapport au conduit 5 autour d'un axe de rotation, correspondant ici à l'axe central du conduit 5.

Plus précisément, la motorisation 9 est configurée pour faire tourner la tête 3, le porteur 7 et l'embase 8.

Cette motorisation contrôle le déplacement angulaire ainsi que la vitesse de déplacement lors du soudage.

D'autres motorisations non représentées permettent le positionnement de la torche 1 dans la pièce 5, axialement et radialement. Ces motorisations sont par exemple utilisées de manière manuelle pour positionner la tête 3 au plus près de la zone de travail. En plus ou alternativement, ces motorisations sont contrôlées de manière automatique afin d'assurer, par exemple, la régulation de la tension d'arc pendant le soudage, ou les mouvements oscillatoires nécessaires à l'opération de soudage.

Dans l'exemple de la figure 1, l'axe central de la tête 3 n'est pas aligné avec l'axe central du porteur 7.

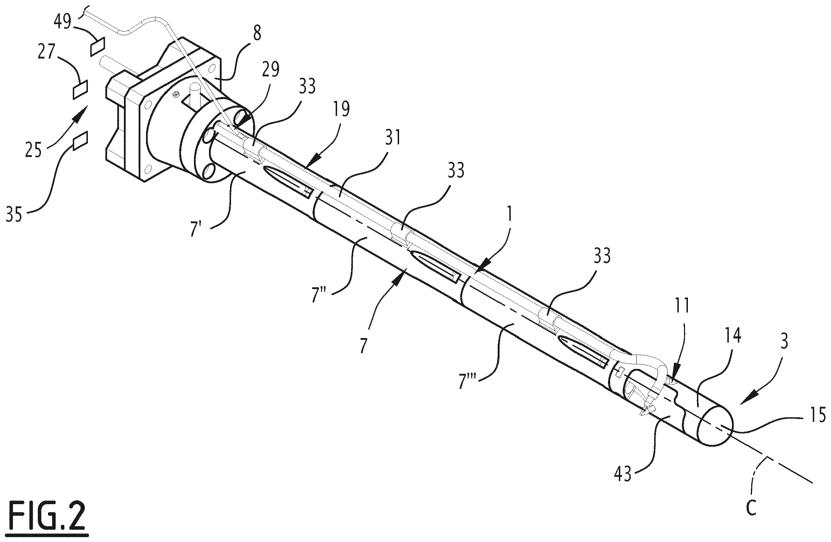

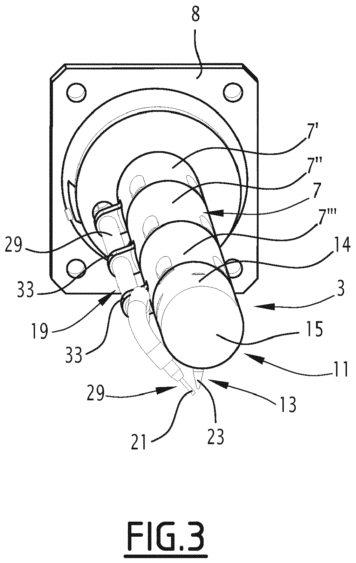

Dans l'exemple des figures 2 et 3 au contraire, l'axe central de la tête 3 est aligné avec l'axe central du porteur 7.

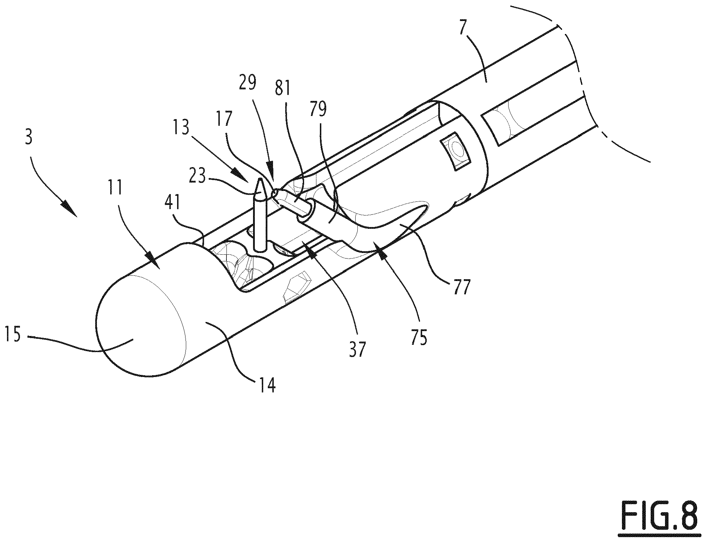

Sur les figures 3 et 8, il apparaît que la tête 3 comporte un corps 11 portant une électrode 13 (cas de la mise en oeuvre du procédé de soudage TIG).

Le corps 11 présente une forme générale cylindrique, avec un tronçon cylindrique 14 et une extrémité axiale 15 en portion de sphère. L'électrode 13 fait saillie radialement par rapport au corps de torche 11.

La torche 1 comporte encore un fil de métal d'apport 17 et un guide-fil 19 guidant le fil de métal d'apport 17 jusqu'à l'électrode 13.

Le guide-fil 19 guide le fil depuis un magasin de stockage du fil en métal d'apport (non représenté) jusqu'à l'électrode 13. Il est agencé pour que l'extrémité libre 21 du fil se trouve immédiatement à côté de la pointe 23 de l'électrode 13.

La torche 1 comprend encore une alimentation électrique 25, comportant une source de courant électrique 27.

Avantageusement, le corps 11 est obtenu par fabrication additive en un métal conduisant l'électricité. L'électrode 13 est raccordée électriquement à la source de courant électrique 27 par le métal constituant le corps 11 de la torche de soudage.

Typiquement, le porteur 7 est également obtenu par fabrication additive en un métal conduisant l'électricité.

Dans ce cas, l'électrode 13 est raccordée électriquement à la source de courant électrique 27 par le métal constituant le porteur 7 de la torche de soudage.

Le porteur 7 est par exemple réalisé en plusieurs tronçons 7', 7", 7‴ fixés les uns aux autres, trois tronçons dans l'exemple représenté.

Chaque tronçon 7', 7", 7‴ définit une portion axiale du porteur. Les tronçons 7', 7", 7‴ sont fixés axialement les uns dans le prolongement des autres.

Le tronçon 7' est monté sur l'embase 8, et le tronçon 7‴ porte la tête 3. Le tronçon 7" raccorde les tronçons 7' et 7'" l'un à l'autre.

Les tronçons 7', 7", 7‴ sont fixés les uns aux autres par tous moyens adaptés : vissage, soudage, etc.

Selon une variante avantageuse, l'embase 8 est également obtenue par fabrication additive en un métal conduisant l'électricité.

L'électrode 13 est alors raccordée électriquement à la source de courant 27 par le métal constituant l'embase 8.

Le courant électrique n'est donc pas amené à l'électrode 13 directement par un câble ou un conducteur annexe.

Pour arriver à l'électrode 13, le courant électrique traverse le matériau constituant les éléments obtenus par fabrication additive, typiquement le porteur 7, le corps de torche 11, et éventuellement l'embase 8.

Les éléments obtenus par fabrication additive sont raccordés électriquement à la source de courant électrique 27 par tous moyens adaptés, par exemple par des câbles non représentés, agencés sur l'embase de la torche de soudage.

Le métal conduisant l'électricité est par exemple un acier, un alliage d'aluminium, un alliage de nickel ou un alliage de titane.

L'électrode 13 est typiquement en tungstène (cas du procédé TIG) pur ou dopé d'oxydes (par ex. cérium, thorium, tantale).

Le potentiel électrique de la source de courant peut être transmis directement au fil d'apport dans le cas de procédé MIG ou MAG.

Le corps 11 est obtenu par tous procédé de fabrication additive adapté (laser-poudre, laser-fil,etc.).

Le porteur 7 et/ou l'embase 8 sont obtenus, le cas échéant, par le même procédé.

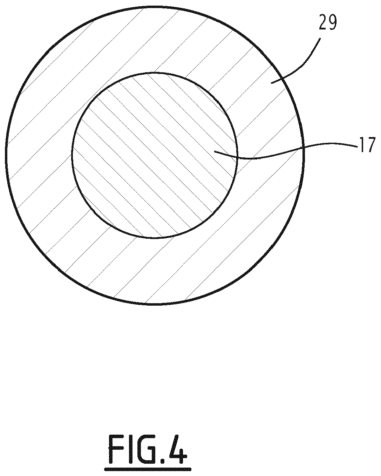

Le guide-fil 19 comprend avantageusement une gaine 29 isolante, à l'intérieur de laquelle le fil en métal d'apport 17 se déplace (figure 4). Le fil de métal d'apport 17 est ainsi isolé électriquement du potentiel des éléments obtenus par fabrication additive, typiquement le porteur 7 et le corps 11, par la gaine isolante 29.

Par exemple, la gaine isolante 29 est en une matière plastique telle que le téflon ou toute autre matière adaptée.

La gaine isolante 29 s'étend typiquement depuis le magasin jusqu'à proximité de l'électrode 13. Le fil de métal d'apport 17 est libre de coulisser à l'intérieur de la gaine isolante 29 vers l'électrode 13. Le fil est entraîné par un organe d'entraînement non représenté.

Selon un mode de réalisation représenté sur les figures 2 et 3, le guide-fil 19 est situé entièrement à l'extérieur de la tête 3.

Le guide-fil 19 comprend dans ce cas par exemple un tube 31 situé entièrement à l'extérieur de la tête 3.

Le tube 31 est situé également entièrement à l'extérieur du porteur 7.

Ce tube s'étend le long du porteur 7, et le long de la tête 3. Il s'arrête à courte distance de la pointe 23 de l'électrode. Il est fixé au porteur 7 par des cavaliers 33.

La gaine isolante 29 et le fil de métal d'apport 17 passent à l'intérieur du tube 31. Le tube 31 est par exemple en acier.

La torche 1 comprend également une alimentation 35 en un gaz de protection.

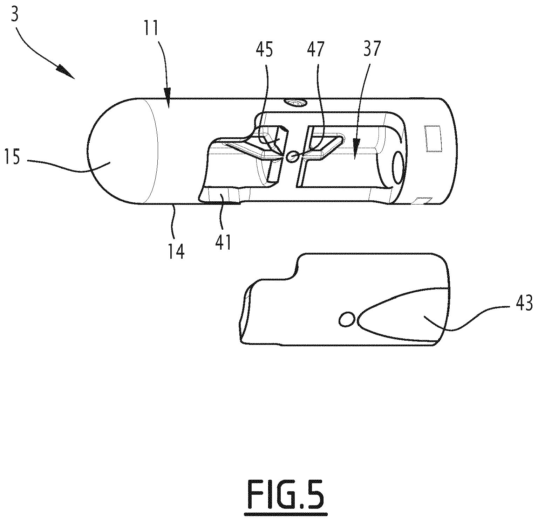

Avantageusement, le corps 11 comprend une cavité interne 37 de passage du gaz de protection, raccordée fluidiquement à l'alimentation en gaz de protection 35. Cette cavité 37 est visible sur les figures 5 à 7.

La cavité interne de passage du gaz de protection 37 est aménagée directement dans la matière du corps 11. Elle présente toute forme adaptée, même compliquée ou tortueuse. Elle est obtenue de manière simple et économique du fait que le corps 11 est obtenu par fabrication additive.

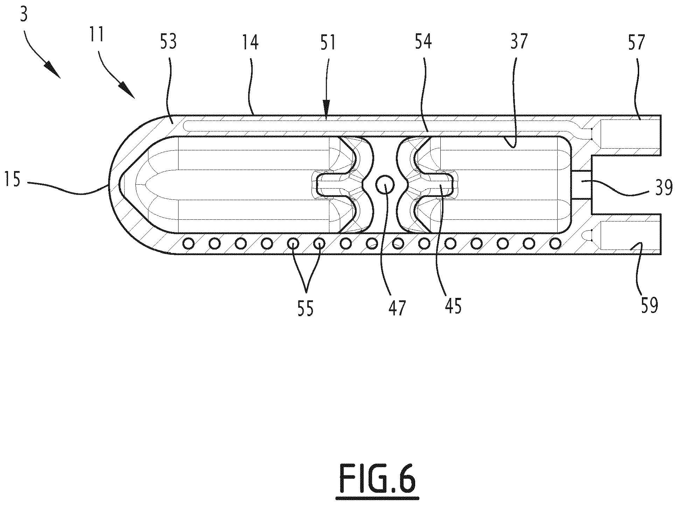

Un orifice 39 d'alimentation en gaz de protection est ménagé dans le corps 11 (figure 6). Il débouche dans la cavité interne de passage du gaz de protection 37, permettant sa stabilisation. Il est raccordé à l'alimentation en gaz de protection 35 par tous moyens adaptés, par exemple par un conduit non représenté traversant toute la longueur de la torche 1 depuis l'embase jusqu'au corps 11, à travers le porteur 7.

Le corps 11 comporte également une ouverture 41 de diffusion du gaz de protection autour de l'électrode 13, dans laquelle débouche la cavité interne de passage du gaz de protection 37 (figure 5).

L'ouverture 41 est par exemple ménagée dans le tronçon cylindrique 14. L'électrode 13 traverse l'ouverture de diffusion 41.

La tête 3 comprend de préférence une grille de diffusion 43 s'étendant dans l'ouverture de diffusion 41 et obtenue par fabrication additive conjointement avec le corps 11.

La grille de diffusion 43 est donc venue de matière avec le corps 11. Elle constitue une seule pièce avec le corps 11. Sur la figure 4, elle est représentée séparée du corps 11 seulement pour laisser apparaître la structure interne de la tête 3.

La grille de diffusion 43 est poreuse vis-à-vis du gaz de protection. Elle présente des orifices de passage pour le gaz de protection (non représentés sur la figure 5), de tailles et de configuration adaptées. De préférence, ces orifices constituent un maillage tridimensionnel. Les orifices sont par exemple de section rectangulaire et sont disposés selon un motif rectangulaire.

La grille de diffusion 43 occupe toute la surface de l'ouverture de diffusion 41.

Il est à noter que le corps 11 forme un massif 45 situé en travers de la cavité interne de passage du gaz de protection 37 (figures 5 et 6). Ce massif 45 présente un orifice 47 de réception de l'électrode 13, dans lequel l'électrode 13 est bloquée par tout moyen adapté, par exemple par coopération de formes. Ce massif constitue également un renfort et participe à la rigidité du corps 11, pour palier à l'affaiblissement occasionné par la cavité 37 et la structure ajourée de la grille de diffusion 43.

La tête de soudage 1 comprend une alimentation 49 en un fluide de refroidissement (figure 2). Le corps 11 comprend une cavité interne 51 de passage du fluide de refroidissement, raccordée fluidiquement à l'alimentation en fluide de refroidissement 49 (figure 6). Ce fluide réfrigérant circule en circuit fermé au travers de la torche depuis l'embase jusqu'au corps 11 de torche, à travers le porteur 7.

Selon l'invention et comme montrée sur la figure 6, le corps 11 comprend une paroi externe 53 délimitant intérieurement la cavité interne de passage du gaz de protection 37. La cavité interne de passage du fluide de refroidissement 51 est ménagée dans l'épaisseur de la paroi externe 53.

Cette cavité interne 51 a une forme complexe. Elle comporte typiquement un ou plusieurs tronçons axiaux tels que le tronçon 54 de la figure 6, et un ou plusieurs tronçons circonférentiels tels que les tronçons 55 représentés sur la figure 6. Ces tronçons sont agencés pour parcourir toute la surface du corps 11. Sa trajectoire est ainsi sensiblement hélicoïdale, ce qui est rendu possible grâce au mode de fabrication non conventionnel.

Des orifices d'entrée et de sortie de fluide de refroidissement 57, 59 sont ménagés dans le corps 11 (figure 6).

Les tronçons 54 et 55 constituent un circuit fermé raccordant fluidiquement l'entrée 57 à la sortie 59.

L'entrée 57 et la sortie 59 sont raccordées à l'alimentation en fluide de refroidissement 49 par tous moyens adaptés, par exemple des conduits non représentés traversant le porteur 7.

La cavité interne de passage du fluide de refroidissement 51 est ainsi ménagée directement dans la matière du corps 11. Elle est obtenue de manière simple et économique du fait que le corps 11 est obtenu par fabrication additive.

Avantageusement, la torche 1 comprend un système d'observation vidéo 61. Le corps 11 comporte une cavité interne 63 de passage du système d'observation vidéo 61.

Le système d'observation vidéo 61 comporte par exemple un endoscope 65 s'étendant dans la cavité interne 63. L'endoscope 65 comporte de préférence un système de refroidissement autonome.

L'endoscope 65 embarque une diode 67 configurée pour assurer la vision lorsque l'arc électrique est éteint. La diode 67 est portée par une extrémité de l'endoscope 65 recourbée pour pointer vers la pointe 23 de l'électrode 13, à travers l'orifice 41.

L'endoscope 65 s'étend sur toute la longueur de la torche, depuis l'embase 8 jusqu'à la tête 3, à l'intérieur du porteur 7.

L'image est dans ce cas traitée par une caméra externe, située à une extrémité de l'endoscope 65 opposée à la diode 67. L'image est envoyée vers un moniteur pour permettre à un opérateur d'assurer le pilotage de la tête de soudage.

Selon une autre variante, le système d'observation vidéo comporte une caméra installée en bout de corps de torche. Un dispositif d'éclairage est alors ajouté à proximité. Un câble transportant le signal de l'image s'étend dans la cavité interne 63. Il est raccordé par une extrémité à la caméra. Il parcourt la torche jusqu'à son embase 8, à l'intérieur du porteur 7. Le câble est raccordé à un moniteur pour permettre à un opérateur d'assurer le pilotage de la tête de soudage.

La cavité interne de passage du système d'observation vidéo 63 est ménagée dans l'épaisseur de la paroi externe 53.

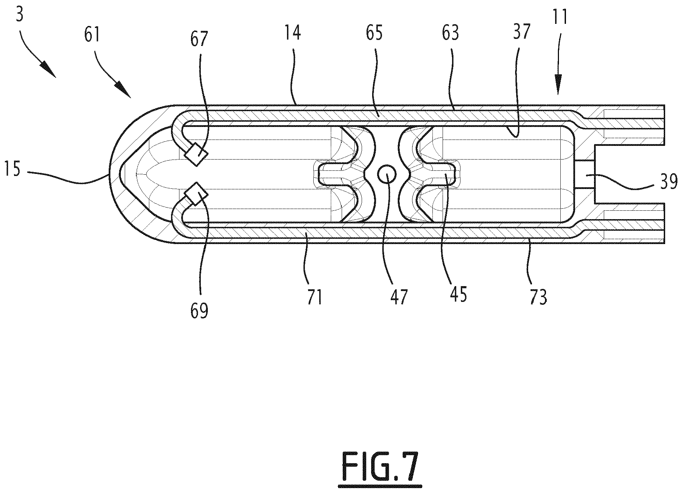

De préférence, la torche 1 comprend au moins un capteur 69 porté par le corps 11 et un câble 71 de transmission du signal raccordé au capteur 69 (figure 7). Le corps 11 présente une cavité interne 73 de passage du câble de transmission du signal 71.

Le capteur 69 est par exemple une lampe additionnelle, une sonde de température ou tout autre type de capteur.

La cavité interne de passage du câble de transmission du signal 73 est ménagée dans l'épaisseur de la paroi externe 53.

Le câble de transmission du signal 71 est configuré pour transmettre les données acquises par le capteur 69 à un équipement distant, par exemple une unité de traitement numérique non représentée.

Le câble de transmission du signal 71, en sortant de la cavité interne 73, parcourt le porteur 7 puis est connecté à l'équipement distant.

Selon une variante non représentée, la torche 1 comprend une source de lumière portée par le corps 11 et un câble d'alimentation électrique raccordé à la source de lumière. Le corps 11 présente alors une cavité interne de passage du câble d'alimentation électrique.

La source de lumière est typiquement prévue pour visualiser la zone de travail de la torche 1.

La cavité interne de passage du câble d'alimentation électrique est ménagée dans l'épaisseur de la paroi externe 53.

Le câble d'alimentation électrique est configuré pour raccorder la source de lumière à une source d'énergie électrique non représentée. Le câble d'alimentation électrique, en sortant de la cavité interne, parcourt le porteur 7 puis est connecté à l'alimentation électrique.

Selon la figure 8, le corps 11 comporte une cavité interne 75 dans laquelle passent le fil de métal d'apport 17 et la gaine isolante 29.

Comme précédemment, le fil de métal d'apport 17 circule à travers la gaine isolante 29 facilitant son dévidage et l'isolant du potentiel électrique, depuis l'embase jusqu'au tronçon 79. Un moteur externe (non représenté) l'entraine depuis une bobine (non représentée).

La cavité interne 75 de passage du fil métal d'apport 17 comporte un tronçon 77 ménagé dans l'épaisseur de la paroi externe 53. Ce tronçon 77 est prolongé par un tronçon 79 faisant saillie sur la surface externe du corps et débouchant au bord de l'ouverture de diffusion 41. L'orientation de ce tronçon 79 définit l'angle d'arrivée du fil de métal d'apport 17 dans le bain de fusion.

Le guide-fil 19 comprend un embout 81 en céramique fixé au corps 11 dans le prolongement de la cavité interne 75. Cet embout est creux, et définit un passage interne pour le fil de métal d'apport 17.

L'embout 81 prolonge le tronçon 79 sur une courte longueur vers la pointe 23 de l'électrode 13. Il forme par exemple un angle de 45 ° avec l'électrode.

L'embout 81 est par exemple fixé sur l'extrémité du tronçon 79 de manière amovible, par exemple par vissage. L'embout 81 est en effet une pièce d'usure, subissant l'abrasion du fil de métal d'apport 17 au même titre que la gaine 29.

Le fil de métal d'apport 17 sortant de la cavité interne 75 traverse l'embout 81 et débouche à proximité de l'électrode 23, où il est consommé.

La ou chaque cavité interne 63, 73, 75 est ainsi ménagée directement dans la matière du corps 11. Elle est obtenue de manière simple et économique du fait que le corps 11 est obtenu par fabrication additive.

Les différentes pièces obtenues par fabrication additive (corps, tronçons, embase, etc.) ne nécessitent que très peu de reprises après impression. Dans la variante des figures 2 et 3, il est nécessaire de réaliser les taraudages destinés à la fixation précise du tube 31. Il peut être également nécessaire de procéder au nettoyage et à la correction de planéïté des surfaces de liaison électrique entre l'embase 8, le porteur 7, le corps 11 et l'électrode 13.

L'invention porte aussi sur un procédé de fabrication d'une torche de soudage ayant les caractéristiques ci-dessus.

Ce procédé comprend une étape fabrication au cours de laquelle le corps 11 est obtenu par fabrication additive en un métal conduisant l'électricité.

Cette étape de fabrication permet avantageusement de former dans le corps 11 les cavités de la liste ci-dessous :
- cavité interne de passage du gaz de protection 37 ;
- cavité interne de passage du fluide de refroidissement 51 ;
- cavité interne de passage du système d'observation vidéo 61 le cas échéant ;
- cavité interne de passage du câble de transmission du signal 73 le cas échéant;
- cavité interne de passage du câble d'alimentation électrique raccordée à la source de lumière le cas échéant ;
- cavité interne 75 de passage de la gaine isolante et du fil de métal d'apport le cas échéant..

De préférence, l'étape de fabrication permet également de former la grille de diffusion 43 conjointement avec le corps 11.

Le procédé comporte typiquement une seconde étape fabrication au cours de laquelle le porteur 7 est obtenu par fabrication additive en un métal conduisant l'électricité, et/ou une troisième étape fabrication au cours de laquelle l'embase 8 est obtenue par fabrication additive en un métal conduisant l'électricité.

L'invention présente de multiples avantages.

Elle permet de réaliser des torches de soudage miniaturisées, par exemple d'un diamètre inférieur à 20 mm, dans lesquelles il est possible d'implémenter une ou plusieurs des fonctions suivantes : amenée du fil d'apport, amenée de la protection gazeuse, amenée de la vidéo, amenée de la puissance électrique, refroidissement de la torche et implantation de tout capteur de mesure nécessaire au contrôle du procédé de soudage.

L'invention permet de réaliser des torches de soudage de géométrie quelconque dans les trois dimensions (à titre d'exemple non rectilignes et incurvées) dans le but de s'adapter à la configuration réelle de l'assemblage à réaliser et aux contraintes d'environnement et d'espace disponible.

La technique de fabrication par impression tridimensionnelle permet de modeler à façon, dans un délai réduit et à moindre coût, le matériel nécessaire à l'opération de soudage en fonction des contraintes de l'application rencontrée, et des problématiques à résoudre.

Dans les exemples de réalisation décrits ci-dessus, la torche de soudage comporte une tête 3 fixée à l'embase 8 par l'intermédiaire d'un porteur 7. En variante, la tête 3 est solidaire de l'embase 8. En d'autres termes, elle est directement liée à l'embase 8, sans interposition d'un porteur.

Ainsi la torche de soudage comporte dans certains cas plusieurs éléments obtenus par fabrication additive en un métal conduisant l'électricité. Comme décrit ci-dessus, au moins le corps 11 de la tête est obtenu par fabrication additive. En plus, un ou plusieurs segments du porteur 7 et/ou l'embase 8 sont avantageusement obtenus par fabrication additive. Selon une variante, ces différents éléments sont obtenus par fabrication additive séparément puis assemblés les uns aux autres. Selon une autre variante, ces différents éléments sont obtenus ensemble, par une seule opération de fabrication additive conduisant à la formation d'une pièce unique. Ces différents éléments sont alors venus de matière.

## Revendications

1. Torche de soudage, la torche de soudage (1) comprenant :
- une tête (3) comportant un corps (11) portant une électrode (13) ;
- une alimentation électrique (25), comportant une source de courant électrique (27) ;
- un fil de métal d'apport (17) et un guide-fil (19) guidant le fil de métal d'apport (17) jusqu'à l'électrode (13);
et **caractérisé par** :
le corps (11) étant obtenu par fabrication additive en un métal conduisant l'électricité, l'électrode (13) étant raccordée électriquement à la source de courant électrique (27) par le métal constituant le corps (11) le guide-fil (19) comprenant une gaine isolante (29) à l'intérieur de laquelle se déplace le fil de métal d'apport (17), le fil de métal d'apport (17) étant isolé électriquement du potentiel du corps (11) par la gaine isolante (29) ; dans laquelle la torche comprend une alimentation en un gaz de protection (35), le corps (11) comprenant une cavité interne de passage du gaz de protection (37) raccordée fluidiquement à l'alimentation en gaz de protection (35) ; et
en ce que la torche (1) comprend une alimentation en un fluide de refroidissement (49), le corps (11) comprenant une cavité interne de passage du fluide de refroidissement (51) raccordée fluidiquement à l'alimentation en fluide de refroidissement (49) ; et
en ce que le corps (11) comprend une paroi externe (53) délimitant intérieurement la cavité interne de passage du gaz de protection (37), la cavité interne de passage du fluide de refroidissement (51) étant ménagée dans l'épaisseur de la paroi externe (53).

2. Torche de soudage selon la revendication 1, dans laquelle la torche de soudage (1) comprend un porteur (7) solidaire de la tête (3), le porteur (7) étant obtenu par fabrication additive en un métal conduisant l'électricité, l'électrode (13) étant raccordée électriquement à la source de courant électrique (27) par le métal constituant le porteur (7), le fil de métal d'apport (17) étant isolé électriquement du potentiel du porteur (7) par la gaine isolante (29)

3. Torche de soudage selon la revendication 2, dans laquelle la torche de soudage (1) comprend une embase (8) obtenue par fabrication additive en un métal conduisant l'électricité, l'électrode (13) étant raccordée électriquement à la source de courant électrique (27) par le métal constituant l'embase (8), le porteur (7) étant solidaire de l'embase (8).

4. Torche de soudage selon la revendication 1, dans laquelle la torche de soudage (1) comprend une embase (8) obtenue par fabrication additive en un métal conduisant l'électricité, l'électrode (13) étant raccordée électriquement à la source de courant électrique (27) par le métal constituant l'embase (8), la tête (3) étant solidaire de l'embase (8).

5. Torche de soudage selon l'une quelconque des revendications précédentes, dans laquelle le corps (11) comporte une cavité interne (75) dans laquelle passent le fil de métal d'apport (17) et la gaine isolante (29).

6. Torche de soudage selon la revendication 5, dans laquelle le guide-fil (19) comprend un embout (81) en céramique fixé au corps (11) dans le prolongement de la cavité interne (75).

7. Torche de soudage selon l'une quelconque des revendications 1 à 4, dans laquelle le guide-fil (19) comprend un tube (31) situé entièrement à l'extérieur de la tête (3), dans lequel passent le fil de métal d'apport (17) et la gaine isolante (29).

8. Torche de soudage selon l'une quelconque des revendications précédentes, dans laquelle le corps (11) comporte une ouverture de diffusion du gaz de protection (41) autour de l'électrode (13) dans laquelle débouche la cavité interne de passage du gaz de protection (37), la tête (3) comprenant une grille de diffusion (43) s'étendant dans l'ouverture de diffusion (41) et obtenue par fabrication additive conjointement avec le corps (11).

9. Torche de soudage selon l'une quelconque des revendications précédentes, dans laquelle la torche (1) comprend un système d'observation vidéo (61), le corps (11) ayant une cavité interne de passage du système d'observation vidéo (63).

10. Torche (1) de soudage selon l'une quelconque des revendications précédentes, dans laquelle la torche comprend au moins un capteur (69) porté par le corps (11) et un câble de transmission du signal (71) raccordé au capteur (69), le corps (11) ayant une cavité interne de passage du câble de transmission du signal (73).

11. Procédé de fabrication d'une torche de soudage (1) selon l'une quelconque des revendications précédentes, le procédé comprenant une étape fabrication **caractérisé en ce que** le corps (11) est obtenu par fabrication additive en un métal conduisant l'électricité.

## Patentansprüche

1. Schweißbrenner, der Schweißbrenner (1) umfassend:
- einen Kopf (3), umfassend einen Körper (11), der eine Elektrode (13) trägt;
- eine Stromversorgung (25), umfassend eine elektrische Stromquelle (27);
- einen Zusatzwerkstoffdraht (17) und eine Drahtführung (19), die den Zusatzwerkstoffdraht (17) bis zu der Elektrode (13) führt;
und **dadurch gekennzeichnet:**
**dass** der Körper (11) durch additive Fertigung aus einem elektrisch leitenden Metall erlangt wird, wobei die Elektrode (13) durch das Metall, das den Körper (11) bildet, elektrisch mit der elektrischen Stromquelle (27) verbunden ist
die Drahtführung (19) umfassend eine Isolierhülle (29), innerhalb derer sich der Zusatzwerkstoffdraht (17) bewegt, wobei der Zusatzwerkstoffdraht (17) durch die Isolierhülle (29) elektrisch von dem Potenzial des Körpers (11) isoliert ist;
wobei der Brenner eine Schutzgasversorgung (35) umfasst, der Körper (11) umfassend einen inneren Durchgangshohlraum des Schutzgases (37), der fluidisch mit der Schutzgasversorgung (35) verbunden ist; und
**dass** der Brenner (1) eine Kühlfluidzufuhr (49) umfasst, der Körper (11) umfassend einen inneren Durchgangshohlraum des Kühlmittels (51), der fluidisch mit der Kühlfluidzufuhr (49) verbunden ist; und
**dass** der Körper (11) eine Außenwand (53) umfasst, die den inneren Durchgangshohlraum des Schutzgases (37) innen begrenzt, wobei der innere Durchgangshohlraum des Kühlfluids (51) in der Stärke der Außenwand (53) ausgebildet ist.

2. Schweißbrenner nach Anspruch 1, wobei der Schweißbrenner (1) einen Träger (7) aufweist, der fest mit dem Kopf (3) verbunden ist, wobei der Träger (7) durch additive Fertigung aus einem elektrisch leitenden Metall erlangt wird, wobei die Elektrode (13) durch das Metall, das den Träger (7) bildet elektrisch mit der elektrischen Stromquelle (27) verbunden ist, wobei der Zusatzwerkstoffdraht (17) durch die Isolierhülle (29) elektrisch von dem Potenzial des Trägers (7) isoliert ist

3. Schweißbrenner nach Anspruch 2, wobei der Schweißbrenner (1) eine Basis (8) umfasst, die durch additive Fertigung aus einem elektrisch leitenden Metall erlangt wird, wobei die Elektrode (13) durch das Metall, das die Basis (8) bildet, elektrisch mit der elektrischen Stromquelle (27) verbunden ist, wobei der Träger (7) fest mit der Basis (8) verbunden ist.

4. Schweißbrenner nach Anspruch 1, wobei der Schweißbrenner (1) eine Basis (8) umfasst, die durch additive Fertigung aus einem elektrisch leitenden Metall erlangt wird, wobei die Elektrode (13) durch das Metall, das die Basis (8) bildet, elektrisch mit der elektrischen Stromquelle (27) verbunden ist, wobei der Kopf (3) fest mit der Basis (8) verbunden ist.

5. Schweißbrenner nach einem der vorherigen Ansprüche, wobei der Körper (11) einen inneren Hohlraum (75) umfasst, durch den der Zusatzwerkstoffdraht (17) und die Isolierhülle (29) verlaufen.

6. Schweißbrenner nach Anspruch 5, wobei die Drahtführung (19) eine Keramikspitze (81) umfasst, die an dem Körper (11) in Verlängerung des inneren Hohlraums (75) befestigt ist.

7. Schweißbrenner nach einem der Ansprüche 1 bis 4, wobei die Drahtführung (19) ein Rohr (31) umfasst, das sich vollständig außerhalb des Kopfs (3) befindet und durch das der Zusatzwerkstoffdraht (17) und die Isolierhülle (29) verlaufen.

8. Schweißbrenner nach einem der vorherigen Ansprüche, wobei der Körper (11) eine Diffusionsöffnung des Schutzgases (41) um die Elektrode (13) umfasst, in die der innere Durchgangshohlraum des Schutzgases (37) mündet, der Kopf (3) umfassend ein Diffusionsgitter (43), das sich in die Diffusionsöffnung (41) erstreckt und durch additive Fertigung gemeinsam mit dem Körper (11) erlangt wird.

9. Schweißbrenner nach einem der vorherigen Ansprüche, wobei der Brenner (1) ein Videobeobachtungssystem (61) umfasst, wobei der Körper (11) einen inneren Durchgangshohlraum des Videobeobachtungssystems (63) aufweist.

10. Schweißbrenner (1) nach einem der vorherigen Ansprüche, wobei der Brenner mindestens einen Sensor (69), der von dem Körper (11) getragen wird, und ein mit dem Sensor (69) verbundenes Übertragungskabel des Signals (71) umfasst, wobei der Körper (11) einen inneren Durchgangshohlraum des Übertragungskabels des Signals (73) aufweist.

11. Verfahren zur Herstellung eines Schweißbrenners (1) nach einem der vorherigen Ansprüche, das Verfahren umfassend einen Herstellungsschritt, **dadurch gekennzeichnet, dass** der Körper (11) durch additive Herstellung aus einem elektrisch leitfähigen Metall erlangt wird.

## Claims

1. A welding torch, the welding torch (1) comprising:
- a head (3), having a body (11) bearing an electrode (13);
- a power supply (25), having an electric power source (27); and
- a filler wire (17) and a wire guide (19) guiding the filler wire (17) to the electrode (13);
and **characterized by**
the body (11) being obtained by additive manufacturing from an electrically conductive metal, the electrode (13) being electrically connected to the electric power source (27) by the metal constituting the body (11)
the wire guide (19) comprising an insulating sheath (29) inside which the filler metal wire (17) moves, the filler metal wire (17) being electrically insulated from the potential of the body (11) by the insulating sheath (29); wherein the torch comprises a protective gas supply (35), the body (11) comprising an inner protective gas passage cavity (37) fluidly connected to the protective gas supply (35); and wherein the torch (1) comprises a cooling fluid supply (49), the body (11) comprising an inner cooling fluid passage cavity (51) fluidly connected to the cooling fluid supply (49); wherein the body (11) comprises an outer wall (53) internally delimiting the inner protective gas passage cavity (37), the inner cooling fluid passage cavity (51) being formed within the thickness of the outer wall (53).

2. The welding torch according to claim 1, wherein the welding torch (1) comprises a carrier (7) integral with the head (3), the carrier (7) being obtained by additive manufacturing from an electrically conductive metal, the electrode (13) being electrically connected to the electric power source (27) through the metal constituting the carrier (7), the filler metal wire (17) being electrically insulated from the potential of the carrier (7) by the insulating sheath (29)

3. The welding torch according to claim 2, wherein the welding torch (1) comprises a base (8) obtained by additive manufacturing from an electrically conductive metal, the electrode (13) being electrically connected to the electric power source (27) through the metal constituting the base (8), the carrier (7) being integral with the base (8).

4. The welding torch according to claim 1, wherein the welding torch (1) comprises a base (8) obtained by additive manufacturing from an electrically conductive metal, the electrode (13) being electrically connected to the electric power source (27) by the metal constituting the base (8), the head (3) being integral with the base (8).

5. The welding torch according to any one of the preceding claims, wherein the body (11) comprises an inner cavity (75) in which the filler metal wire (17) and the insulating sheath (29) pass.

6. The welding torch according to claim 5, wherein the wire guide (19) comprises a ceramic tip (81) attached to the body (11) as an extension of the inner cavity (75).

7. The welding torch according to any one of claims 1 to 4, wherein the wire guide (19) comprises a tube (31) located entirely outside the head (3), through which the filler wire (17) and the insulating sheath (29) pass.

8. The welding torch according to any one of the preceding claims, wherein the body (11) comprises a protective gas diffusion opening (41) around the electrode (13) into which the inner protective gas passage cavity (37) opens, the head (3) comprising a diffusion grid (43) extending into the diffusion opening (41) and obtained by additive manufacturing together with the body (11).

9. The welding torch according to any one of the preceding claims, wherein the torch (1) comprises a video observation system (61), the body (11) having an inner cavity for passage of the video observation system (63).

10. The welding torch (1) according to any of the preceding claims, wherein the torch comprises at least one sensor (69) carried by the body (11) and a signal transmission cable (71) connected to the sensor (69), the body (11) having an inner signal transmission cable passage cavity (73).

11. A method for manufacturing a welding torch (1) according to any of the preceding claims, the method comprising a manufacturing step **characterized in that** the body (11) is obtained by additive manufacturing from an electrically conductive metal.
